# FASCICULE DE BREVET EUROPEEN

(11) **EP 1 361 786 B1**
(45) Date de publication et mention de la délivrance du brevet: **06.10.2004**
(21) Numéro de dépôt: 02704853.7
(22) Date de dépôt: 15.02.2002
(51) Int. Cl.: A01F 29/00, B01F 15/00, A01K 5/00

(54) **MACHINE MELANGEUSE DISTRIBUTRICE DE PRODUITS POUR L'ALIMENTATION DU BETAIL**
VIEHFUTTERMISCH- UND VERTEILANLAGE
MACHINE FOR MIXING AND DISTRIBUTING PRODUCTS USED TO FEED LIVESTOCK

(30) Priorité: 16.02.2001 FR 0102128; 27.06.2001 FR 0108459; 06.09.2001 FR 0111536
(43) Date de publication de la demande: 19.11.2003
(73) Titulaire: LUCAS G, 85130 La Verrie (FR)
(72) Inventeur: LUCAS, Gérard, F-85130 La Verrie (FR); RETAILLAUD, Jean-Claude, F-85130 La Verrie (FR)
(74) Mandataire: Catherine, Alain
(86) Numéro de dépôt international: PCT/FR2002/000599
(87) Numéro de publication internationale: WO 2002/065827

(56) Documents cités:
- EP-A- 0 498 543
- GB-A- 2 283 898
- US-A- 3 208 491
- US-A- 6 000 649

## Description

La présente invention concerne une machine mélangeuse distributrice de produits pour l'alimentation du bétail.

Ce type de machine, décrit notamment dans le document US-3 672 640, est formé d'une benne ouverte sur le dessus ; cette benne renferme un rotor de grand diamètre qui s'étend longitudinalement entre les parois d'extrémités et qui est partiellement enveloppé par un fond arrondi en forme d'auge. Ce rotor brasse et mélange les produits qu'il propulse au fur et à mesure vers une vis sans fin disposée latéralement, parallèlement. audit rotor et dont le diamètre est de trois à quatre fois plus petit que celui de ce dernier.

Cette vis latérale s'étend également entre les deux parois d'extrémités et elle est également enveloppée partiellement par un fond en forme d'auge; elle réalise un mouvement longitudinal continu de déplacement des produits d'un bout à l'autre de la benne en allant vers l'extrémité de cette dernière où se situe l'orifice de distribution de sorte que, lorsque cet orifice est fermé par une trappe appropriée, les produits sont déplacés dans la benne, en circuit fermé, et sont brassés grâce au rotor de mélange.

Le document EP-498 543 décrit une machine du type de celle détaillée ci-dessus avec, en plus, une vis de transfert et de découpage, qui permet d'incorporer des produits du genre foin ou paille dans la benne.

Cette vis de transfert dont le diamètre est sensiblement le même que celui de la vis de mélange précitée, est disposée au-dessus de cette dernière, tournant dans le même sens mais avec un pas d'hélice inversé.

Cette vis de transfert comporte, sur sa périphérie, des couteaux ou sections qui permettent d'entraîner et, dans une certaine mesure, de découper le foin ou la paille.

Ce foin ou paille est déposé par paquets sur le dessus de la vis de transfert, dans une sorte de trémie ou entonnoir formé par des volets.

Pour certains types de produits et en particulier le foin, les moyens de découpe du document précité se révèlent nettement insuffisants.

Il est connu, comme décrit dans le document GB-2 283 898, pour un autre type de machine mélangeuse, d'associer un rotor unique de mélange, de grand diamètre, en forme de vis munie de couteaux sur sa périphérie, à un volet dont la bordure proche de ladite vis est munie de dents. Les couteaux de la vis et les dents peuvent permettre de découper les produits et en particulier la paille ou le foin.

Mais la présence de couteaux sur la périphérie de la vis réduit d'autant l'efficacité de cette dernière pour déplacer les produits sur le fond de la benne.

De plus, pour une vis d'un tel diamètre, les efforts au niveau de l'entraînement sont très importants et sont encore aggravés par la présence des couteaux et des dents formant contre-couteaux.

La présente invention propose une machine mélangeuse distributrice comportant des moyens qui permettent une découpe efficace des produits du genre foin ou paille et en particulier tous types de foin.

La présente invention propose aussi un aménagement de la benne au niveau de la zone d'introduction des paquets de foin ou de paille. Il peut en effet se produire des accumulations de produits et des phénomènes de bourrage entré les deux vis, lorsque l'on introduit des paquets de foin ou de paille sur la vis de transfert.

Ces phénomènes proviennent du fait que la vis de distribution comporte, au niveau de l'orifice de distribution, une zone neutre où son hélice est remplacée par des palettes de propulsion tangentielle. Au delà de cette zone neutre, c'est-à-dire à proximité de la paroi d'extrémité, l'hélice de la vis a un pas inversé, pour recentrer les produits sur l'orifice.

Aussi lorsque la vis de distribution fonctionne en vis de recyclage, les produits s'accumulent au niveau de la zone neutre et remontent vers la vis de transfert qui peut déjà être surchargée par la présence de paquets de foin ou de paille.

La présente invention permet de remédier à ces inconvénients.

La machine selon l'invention comporte, sur l'une au moins des vis de transfert et/ou de distribution, des couteaux en forme de sections, disposés par couples, formant un Vé, chaque couple coopérant avec des dents disposées sur un support en forme de poutre par exemple, laquelle poutre s'étend à distance de l'enveloppe de la vis munie desdits couteaux, entre les parois d'extrémités de la benne.

Toujours selon l'invention, les couples de sections sont répartis sur la longueur de la vis, disposés dans un plan radial sur un aménagement particulier de la périphérie de l'hélice, ou montés sur un support approprié disposé derrière la surface active de ladite hélice, solidaire de la vis.

Toujours selon l'invention, le couple de sections se présente sous la forme d'un Vé dont l'angle est de l'ordre de 10 à 45°, coopérant avec des dents qui se présentent par exemple sous la forme d'un triangle ou trapèze ayant le même angle que ledit Vé.

Selon une autre disposition de l'invention, le nombre de couples de sections par tour de vis est de trois à six par exemple et ces couples sont espacés longitudinalement d'une distance de l'ordre de 5 à 15 cm et leur hauteur effective de travail est du même ordre.

Selon une autre disposition de l'invention, les dents formant contre-couteaux sont façonnées pour tout ou partie d'entre elles dans une bande de tôle en acier, laquelle bande est fixée sur le support en forme de poutre.

Selon une autre particularité de l'invention, les couples de sections sont disposés sur la vis de transfert, coopérant avec des dents qui sont disposées sur une poutre s'étendant entre les parois d'extrémités de la machine, laquelle poutre se situe à l'intérieur de la benne, sensiblement au niveau de l'intersection d'un plan vertical tangent à l'enveloppe de la vis de transfert du côté du rotor de mélange, et d'un plan horizontal qui est tangent à la partie supérieure de ladite enveloppe de la vis de transfert.

Toujours selon l'invention, les couples de sections peuvent également coopérer avec des dents disposées sur au moins un support en forme de poutre qui s'étend sur la paroi latérale de la benne à proximité de la vis de transfert, lequel support est disposé sensiblement à l'intersection de ladite paroi latérale avec un plan horizontal tangent à la partie supérieure et/ou la partie inférieure de l'enveloppe de la vis de transfert.

Toujours selon l'invention, les couples de sections sont disposés au niveau de la vis de distribution, en combinaison ou non avec les sections disposées comme détaillé précédemment sur la vis de transfert, lesquelles sections sont réparties sur la longueur de ladite vis de distribution coopérant avec des dents disposées sur une poutre façonnée au niveau de la jonction des portions respectives du fond enveloppant d'une part ladite vis de distribution et d'autre part le rotor de mélange, lesquels couples de sections pouvant également coopérer avec des dents disposées sur un support en forme de poutre solidaire de la paroi latérale de la benne, disposées à l'intersection de cette dernière avec un plan horizontal tangent à la partie supérieure de l'enveloppe de ladite vis de distribution.

Toujours selon l'invention, la machine comporte, au-dessus de la vis de transfert, un aménagement en forme de trémie permettant d'introduire les produits et en particulier les paquets de paille ou de foin, laquelle trémie est disposée dans une zone comprise entre la zone neutre de ladite vis de transfert et la zone neutre de la vis de distribution.

Toujours selon l'invention, la trémie est délimitée par la paroi latérale de la benne, du côté des vis de transfert et de mélange, et par un volet qui est articulé sur la poutre faisant office de support pour les dents, laquelle poutre s'étend entre les parois d'extrémités de la benne, entre la vis de transfert et le rotor de mélange, lequel volet est associé à un organe de commande du genre vérin, de façon à pouvoir être incliné soit du côté du rotor de mélange pour guider les paquets de produits sur la vis de transfert, soit être incliné du côté de ladite vis de transfert pour guider les produits vers ledit rotor de mélange.

L'invention sera encore détaillée à l'aide de la description suivante et des dessins annexés, donnés à titre indicatif, et dans lesquels :

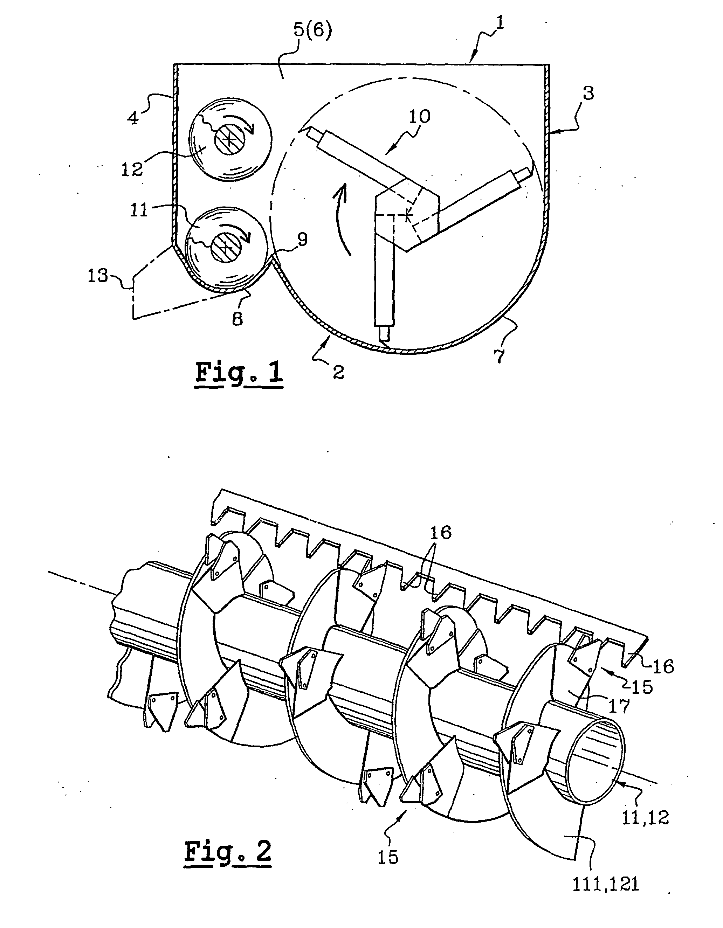

- la figure 1 est une vue schématique en coupe transversale d'une machine mélangeuse distributrice selon l'invention, montrant l'emplacement du rotor de mélange et celui des vis latérales ;
- la figure 2 est une vue en perspective partielle, d'une vis munie de couples de sections, coopérant avec des dents ;
- la figure 3 est une vue de face montrant la position d'un couple de sections sur la vis par rapport à une dent installée sur un support ;
- la figure 4 représente une variante de montage d'un couple de sections sur la périphérie de l'hélice d'une vis ;
- la figure 5 montre les différentes possibilités d'installation des dents qui coopèrent avec les sections installées sur la vis de transfert ;
- la figure 6 montre schématiquement aussi les dents coopérant avec des couples de sections installés en plus sur la vis de mélange ;
- la figure 7 montre l'aménagement de la benne avec une trémie pour faciliter et guider l'introduction des produits du genre paquets de foin ou de paille ;
- la figure 8 est une vue selon 8-8 de la figure 7 ;
- la figure 9 est une vue de dessus partielle de la figure 8.

La machine mélangeuse distributrice est du type de celle qui est décrite dans le document EP-498 543 précité, et seules les parties utiles à la compréhension de l'invention sont détaillées ci-après.

Cette machine comprend une benne 1 en forme de cuve, ouverte sur le dessus, délimitée par un fond 2, des parois latérales 3 et 4 et des parois d'extrémités 5 et 6 comme représenté sur les différentes figures.

Le fond 2 comprend deux parties 7 et 8 en forme d'auges de rayon différent. Le rayon de la partie 8 est de l'ordre de trois à quatre fois inférieur à celui de la partie 7 et ces deux parties se rejoignent en formant une arête 9.

Le fond 7 constitue l'enveloppe partielle d'un rotor de mélange 10 qui s'étend longitudinalement entre les parois d'extrémités 5 et 6. Le fond 8 enveloppe partiellement une vis 11 qui s'étend parallèlement au rotor de mélange 10. Cette vis 11 a un diamètre qui est de trois à quatre fois inférieur à celui du rotor 10 et sa périphérie supérieure se situe sensiblement au même niveau que l'axe du rotor 10.

Une seconde vis 12 s'étend au-dessus de la vis 11, parallèlement, et cette vis a un diamètre qui correspond sensiblement à celui de ladite vis 11.

Le rotor 10 réalise un brassage et le mélange des produits disposés dans la benne 1. Il propulse les produits vers la vis 11. Cette vis 11 déplace les produits d'une extrémité à l'autre de la benne, de l'arrière vers l'avant par exemple pour effectuer un recyclage et un mélange en circuit fermé. Cette vis 11 permet également de réaliser la distribution du produit par l'intermédiaire d'un orifice aménagé au niveau de la goulotte de distribution 13.

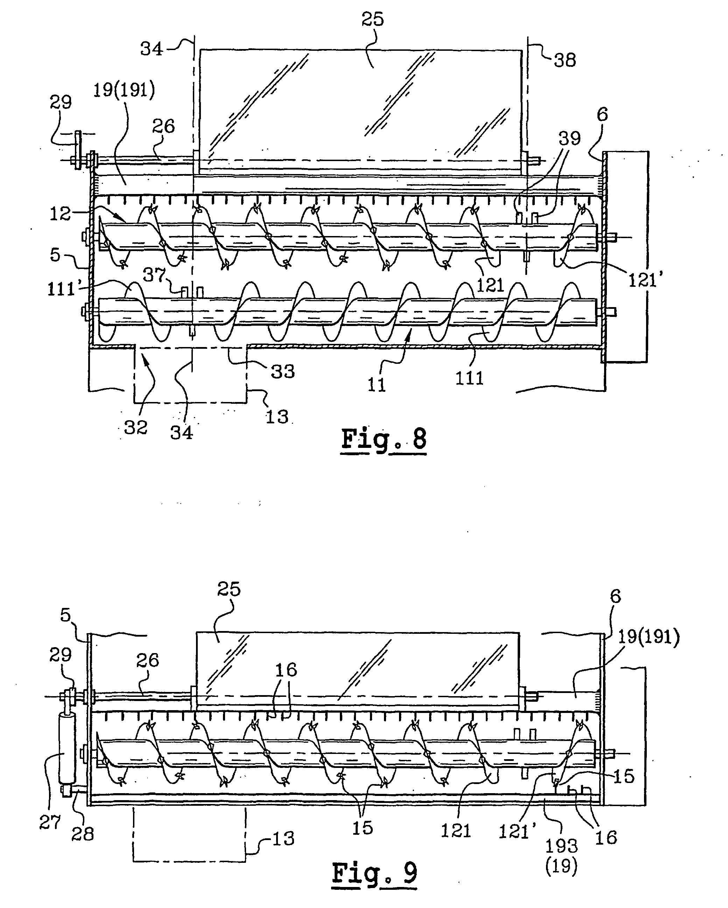

Cet orifice est normalement obturé par une trappe, comme détaillé plus loin en liaison avec la figure 8.

La vis supérieure 12 tourne dans le même sens que la vis de mélange 11 mais le pas de l'hélice est inversé. Cette vis 12 réalise un transfert des produits de l'avant vers l'arrière par exemple à l'inverse de la vis 11, pour faire circuler les produits dans la benne et améliorer le mélange.

Cette machine permet de réaliser le mélange d'aliments de toute sorte et elle peut aussi recevoir des produits du genre paille ou foin.

La figure 2 montre une vis correspondant indifféremment à la vis de distribution 11 ou à la vis de transfert 12, équipée de couteaux qui coopèrent avec des dents 16. Ces couteaux sont par exemple constitués de sections 15 disposées par couples au niveau de la périphérie de l'hélice repérée 111 pour la vis 11 et 121 pour la vis 12. En moyenne, les couples de sections sont au nombre de trois à six par tour sur les vis. Ces couples de sections 15 sont centrés sur des plans radiaux et la distance entre deux plans radiaux adjacents est de l'ordre de 5 à 15 cm par exemple.

La hauteur des sections 15 et leur saillie par rapport à l'enveloppe des hélices des vis sont aussi de l'ordre de 5 à 15 cm et correspondent à celles des dents 16.

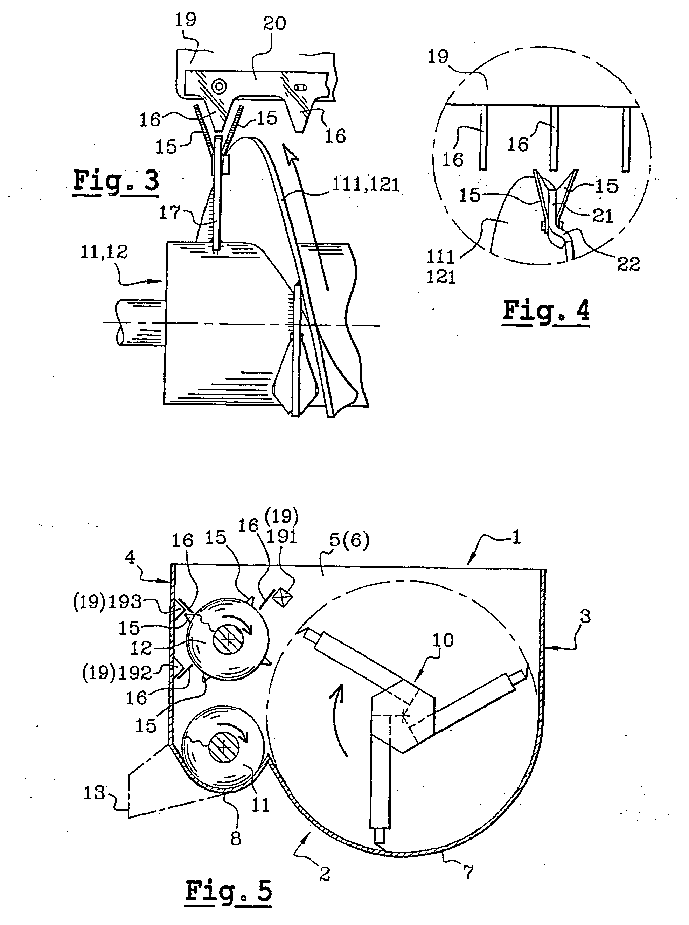

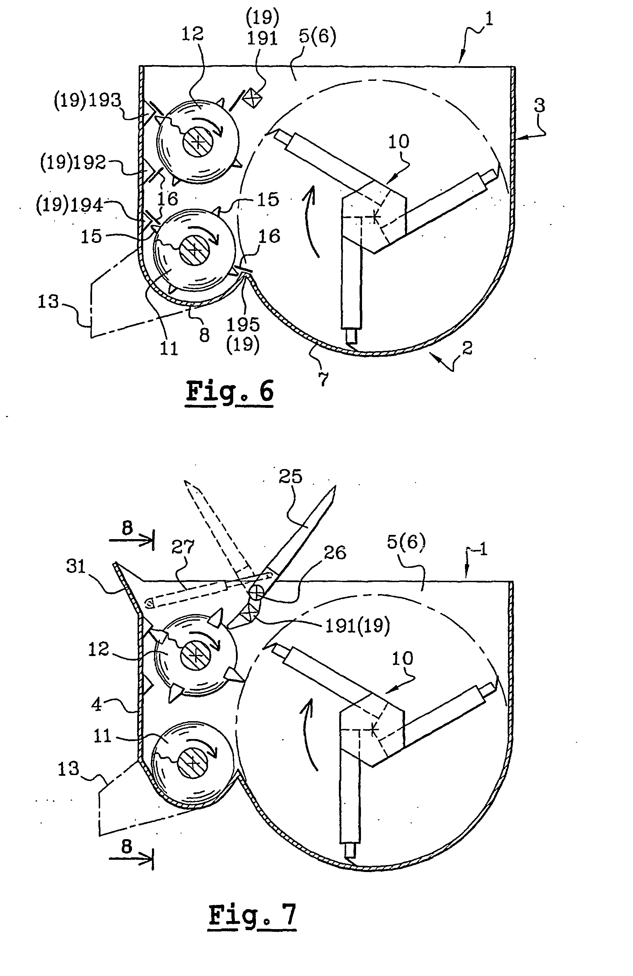

Les couples de sections 15 peuvent être disposés, comme représenté figures 2 et 3, sur un support 17 indépendant disposé dans un plan radial au dos de la partie active de l'hélice ou, comme représenté figure 4, sur un aménagement particulier du rebord périphérique de l'hélice.

Comme représenté figures 2 et 3, les couples de sections 15 sont fixés par boulons 18 par exemple sur le support 17. Ce support 17 se présente sous la forme d'une plaque solidaire du moyeu de la vis correspondante 11 ou 12, et également du dos de l'hélice 111 ou 121.

Le couple de sections 15 forme un Vé dont l'angle est de l'ordre de 10 à 45° par exemple. Ce couple de sections 15 coopère chacun avec une dent 16 qui est associée à un support 19 détaillé plus loin.

Ces dents 16 se présentent par exemple sous la forme de triangles ou de trapèzes pour coopérer avec les couples de sections 15. Comme représenté figure 3, la forme des dents correspond au Vé formé par un couple de sections 15. Le jeu est relativement faible.

Ces dents 16 sont par exemple taillées dans une lame d'acier qui comprend tout ou partie des dents nécessaires à une vis.

Ces dents 16 font de préférence partie d'une bande 20 qui est fixée par des moyens appropriés sur la poutre support 19.

L'exemple de réalisation de la figure 4 montre un couple de sections 15 coopérant avec des dents 16 en forme de simples doigts. Ces dents 16 sont disposées sur un support 19 faisant office de poutre.

Toujours figure 4, les sections 15 forment également un Vé centré dans un plan radial de la vis passant par la dent 16 correspondante. Le rebord périphérique de l'hélice 111 ou 121 de la vis correspondante, est localement redressé c'est-à-dire qu'il comporte un tronçon 21 qui se situe dans un plan radial, suivi d'un tronçon 22 qui offre une solution de continuité réalisant le raccordement dudit tronçon 21 au rebord périphérique de ladite hélice.

Ces vis 11 et/ou 12 aménagées avec des couples de sections 15 peuvent coopérer avec des dents positionnées à plusieurs endroits au niveau de la benne.

Ainsi figure 5, la vis de transfert 12 est équipée de couteaux en forme de couples de sections 15 et ces couples de sections coopèrent avec des dents 16.

Ces dents 16 peuvent être disposées sur une poutre (19), 191, qui s'étend entre les parois d'extrémités 5 et 6 de la benne. Cette poutre 191 est située dans la benne même, sensiblement à l'intersection d'un plan vertical tangent à la périphérie de la vis de transfert 12, du côté du rotor de mélange 10 et d'un plan horizontal tangent à la périphérie supérieure de ladite vis 12.

Selon les nécessités, les dents 16 peuvent également être disposées du côté de la paroi 4 sur une poutre (19), 192 diamétralement opposée à la poutre 191. Cette poutre 192 formant en plus une sorte de renfort pour la paroi 4.

Toujours figure 5, on remarque également la présence d'une poutre (19), 193 disposée contre la paroi latérale 4 au même niveau que la poutre 191. Cette poutre 193 peut également être munie de couteaux 16 qui coopèrent avec les couples de sections 15.

Ainsi, selon les besoins, la machine peut être équipée d'un ou de plusieurs jeux de couteaux disposés soit sur une poutre à l'intérieur de la benne, soit sur une ou plusieurs poutres installées contre la paroi latérale 4.

Toujours figure 5, la vis de distribution 11 se présente sous la forme d'une simple vis avec une hélice dont le contour est lisse pour effectuer simplement une opération de déplacement des produits sur le fond 8, d'un bout à l'autre de la benne.

La figure 6 montre l'adaptation de couples de sections 15 sur la vis de distribution 11. Ces couples de sections peuvent coopérer avec des dents 16 disposées sur une poutre (19), 194 située sur la face interne de la paroi 4. Les couples de sections 15 peuvent également coopérer avec des dents 16 disposées sur une poutre (19), 195 formée par un aménagement particulier au niveau de la jonction des fonds 7 et 8.

Ainsi les vis de distribution 11 et de transfert 12 peuvent être utilisées pour découper à volonté la paille et/ou le foin.

La figure 7 montre un aménagement particulier de la partie supérieure de la benne qui permet de favoriser le guidage de paquets de paille ou de foin à sa partie supérieure, soit vers la vis de transfert 12, soit vers le rotor de mélange 10.

La poutre 191 supporte un volet 25 qui est articulé au moyen d'un axe 26 sur ladite poutre. Ce volet 25 est mobile autour de son axe 26 sous l'effet d'un vérin 27 qui est par. exemple solidaire de la paroi d'extrémité 5 ou 6 au moyen d'un axe 28 et dudit volet 25 par l'intermédiaire d'une manivelle 29.

Ce volet, comme représenté figure 7, peut basculer sur le rotor de mélange 10 pour faciliter l'introduction des paquets de foin ou de paille sur la vis de transfert 12 ou être basculé sur cette dernière comme représenté en traits mixtes fins, de façon à faciliter l'introduction des produits sur le rotor de mélange 10.

On remarque également, toujours figure 7, un aménagement particulier de la partie supérieure de la paroi latérale 4. Cette partie supérieure 31 de la paroi 4 est surélevée et inclinée vers l'extérieur de façon à former avec le volet 25 une sorte de trémie ou d'entonnoir pour mieux accueillir et guider les paquets de foin ou de paille sur la vis de transfert 12.

L'introduction de paquets de foin ou de paille dans la benne, sur la vis de transfert 12, peut provoquer des bourrages.

Pendant la phase de préparation et de mélange des produits dans la benne, ces derniers circulent d'une manière continue dans ladite benne, sous l'effet du rotor de mélange 10 et surtout de la vis de distribution 11 qui déplace ces produits de la paroi 6 vers la paroi 5 et en particulier vers l'orifice 32. Cet orifice 32, qui permet de distribuer les produits par la goulotte 13, est normalement masqué par une trappe 33. On remarque, au niveau de cet orifice 32, une zone neutre sur la vis 11 qui est centrée sur un plan radial 34. La partie extrême de la vis 11, du côté de la paroi 5, comporte une hélice 111' dont le pas est inversé par rapport à l'hélice 111 qui s'étend sur tout le reste de la longueur de la vis.

Dans cette zone neutre de la vis 11, entre les hélices 111 et 111' on trouve en fait des palettes radiales 37 qui propulsent les produits vers l'orifice de sortie 32. Cette zone neutre se situe en face de l'orifice de sortie 32, lequel orifice est centré lui aussi sur le plan radial 34 de la vis 11.

Les produits ont naturellement tendance à remonter vers la vis de transfert 12 au niveau de la zone neutre de la vis 11 lorsque la trappe 33 est en position normale d'obturation de l'orifice 32. Aussi, l'introduction des paquets de produits dans la benne au niveau de cette zone neutre c'est-à-dire au niveau du plan 34, peut générer des désordres du genre bourrage.

La zone d'introduction des produits sur la vis de transfert 12, est placé de préférence en-dehors de la zone neutre de la vis de distribution 11.

La vis de transfert 12 peut comporter elle aussi, à son extrémité située du côté de la paroi 6, une zone neutre centrée sur un plan radial 38 et, au-delà de cette zone neutre, du côté de la paroi 6, comporter une hélice 121' dont le pas est inversé par rapport à celui de l'hélice 121.

Cette zone neutre de la vis 12 peut, comme pour la vis 11, comporter des palettes radiales 39.

La trémie d'introduction des produits sur la vis 12, dont l'une des parois est constituée par le volet 25, s'étend de préférence dans une zone délimitée par le plan médian 34 de la zone neutre de la vis 11 et l'extrémité de la vis de transfert 12 ou le plan médian 38 de la zone neutre de ladite vis 12.

On remarque, figures 8 et 9, que la vis de transfert 12 comporte des couples de sections 15 qui coopèrent avec des dents 16 disposées sur la poutre 191 qui porte le volet 25. Ces dents 16 peuvent par exemple coopérer avec la grande portion de l'hélice 121 comme représenté figure 9 alors que la petite portion de l'hélice 121', du côté de la paroi d'extrémité 6, peut comporter des sections et coopérer avec des dents 16 disposées sur la poutre 193 par exemple.

## Revendications

1. Machine mélangeuse distributrice de produits pour l'alimentation du bétail comprenant notamment de la paille et/ou du foin, laquelle machine est constituée d'une benne (1) munie d'un fond (2) qui s'étend entre des parois latérales (3 et 4) et des parois d'extrémités (5 et 6), lequel fond enveloppe partiellement d'une part, - un rotor de mélange (10) de grand diamètre qui s'étend longitudinalement jusqu'aux parois d'extrémités (5, 6) et, d'autre part, une vis sans fin de distribution (11) qui s'étend parallèlement audit rotor pour déplacer lesdits produits d'une extrémité à l'autre dudit fond, en allant vers l'orifice de distribution (32) qui est aménagé sur l'une desdites parois latérales et se situe vers l'une des parois d'extrémités de ladite benne, lequel orifice (32) est obturable par une trappe (33) selon les besoins, laquelle vis de distribution (11) est surmontée d'une vis de transfert (12) qui, d'une part, déplace les produits longitudinalement dans la benne dans un sens qui est l'inverse de celui induit par ladite vis de distribution et qui, d'autre part, comporte des couteaux en forme de sections pour déchiqueter et/ou découper les produits du genre foin et/ou paille, lesquels produits sont introduits par le dessus de ladite benne, **caractérisée en ce qu'**elle comporte, sur l'une au moins desdites vis (11, 12), des couteaux en forme de sections (15) disposés par couples formant un Vé, lesquels couples coopèrent avec des dents (16) disposées sur un support en forme de poutre (19), laquelle poutre s'étend à distance de l'enveloppe de la vis porteuse desdits couteaux, entre lesdites parois d'extrémités (5, 6) de ladite benne.

2. Machine selon la revendication 1, **caractérisée en ce que** les couples de sections (15) sont répartis sur la longueur de la vis (11 et/ou 12), et sont chacun montés de façon à être centrés sur un plan radial passant par une dent (16) en correspondance.

3. Machine selon la revendication 2, **caractérisée en ce que** les couples de sections (15) sont répartis sur la longueur de la vis (11 et/ou 12) derrière la surface active de l'hélice (111 et/ou 121) de la vis, et sont montés sur un support (17) en forme de plaque, qui est disposé dans un plan radial, solidaire du moyeu de l'hélice et de cette dernière.

4. Machine selon la revendication 2, **caractérisée en ce que** les couples de sections (15) sont répartis sur la longueur de la vis (11 et/ou 12), et sont montés sur le rebord périphérique de l'hélice (111 et/ou 121) de ladite vis (11 et/ou 12), chaque couple (15) étant disposé au niveau d'un tronçon (21) de l'hélice qui est localement redressé de sorte que ledit couple de section (15) soit centré sur un plan radial passant par une dent (16) en correspondance.

5. Machine selon l'une quelconque des revendications 2 à 4, **caractérisée en ce que** le couple de sections (15) se présente sous la forme d'un Vé dont l'angle est de l'ordre de 10 à 45° selon les besoins.

6. Machine selon l'une quelconque des revendications 1 à 5, **caractérisée en ce que** le nombre de couples de sections (15) par tour sur chaque vis est par exemple de trois à six.

7. Machine selon l'une quelconque des revendications 1 à 6, **caractérisée en ce que** les dents coopérant avec les couples de sections (15) sont espacées d'une distance de l'ordre de 5 à 15 cm et leur hauteur effective de travail est du même ordre.

8. Machine selon l'une quelconque des revendications 1 à 7, **caractérisée en ce que** les dents (16) se présentent sous la forme d'un triangle ou trapèze façonné pour tout ou partie d'entre elles dans une bande de tôle en acier, laquelle bande est fixée sur le support en forme de poutre (19).

9. Machine selon l'une quelconque des revendications 1 à 8,**caractérisée en ce que** les couples de sections (15) sont disposés et répartis sur la vis de transfert (12).

10. Machine selon la revendication 9, **caractérisée en ce que** les dents (16) coopérant avec les couples de sections (15) sont disposées sur une poutre (191) qui se situe sensiblement au niveau de l'intersection d'un plan vertical qui est tangent à l'enveloppe de la vis de transfert (12), du côté du rotor de mélange (10), et d'un plan horizontal qui est tangent à la partie supérieure de ladite enveloppe de la vis de transfert.

11. Machine selon l'une quelconque des revendications 9 ou 10, **caractérisée en ce que** les dents (16) coopérant avec les couples de sections (15), sont disposées sur un support en forme de poutre (193) qui s'étend sur la paroi latérale (4) de la benne, sensiblement à l'intersection de cette demière avec un plan horizontal qui est tangent à la partie supérieure de l'enveloppe de la vis de transfert (12).

12. Machine selon l'une quelconque des revendications 9 à 11, **caractérisée en ce que** les dents (16) coopérant avec les couples de sections (15), sont disposées sur un support en forme de poutre (192) fixée sur la paroi latérale (4), au niveau de l'intersection de cette dernière avec un plan horizontal qui est tangent à la partie inférieure de l'enveloppe de la vis de transfert (12).

13. Machine selon l'une quelconque des revendications 1 à 12, **caractérisée en ce qu'**elle comporte des couples de sections (15) disposés au niveau de la vis de distribution (11), répartis sur la longueur de cette dernière.

14. Machine selon la revendication 13, **caractérisée en ce que** les dents coopérant avec les couples de sections (15) sont disposées sur une poutre (195) façonnée à la jonction des portions du fond (2) enveloppant d'une part la vis de distribution (11) et, d'autre part, le rotor de mélange (10).

15. Machine selon l'une quelconque des revendications 13 ou 14, **caractérisée en ce que** les dents (16) coopérant avec les couples de sections (15) disposées sur la vis de distribution (11) sont disposées sur une poutre (194) solidaire de la paroi latérale (4) de la benne, à l'intersection de cette dernière avec un plan horizontal qui est tangent à la partie supérieure de l'enveloppe de ladite vis de distribution (11).

16. Machine selon l'une quelconque des revendications 1 à 15, **caractérisée en ce qu'**elle comporte une sorte de trémie pour l'introduction des produits dans la benne (1), laquelle trémie est située au-dessus de la vis de transfert (12) dans une zone délimitée par le plan radial (34) de la zone neutre de la vis de distribution (11) et le plan radial (38) de la zone neutre de ladite vis de transfert (12).

17. Machine selon la revendication 16, **caractérisée en ce qu'**elle comporte un volet (25) formant paroi pour la trémie, lequel volet est articulé sur la poutre qui s'étend entre les parois avant et arrière de la benne, entre la vis de transfert (12) et le rotor de mélange (10), lequel volet (25) est associé à un organe de commande du genre vérin (27), de façon à pouvoir être incliné soit du côté dudit rotor de mélange (10), soit du côté de ladite vis de transfert (12) pour guider les produits qui sont introduits dans la benne (1), soit sur l'un, soit sur l'autre.

## Patentansprüche

1. Viehfuttermisch- und Verteilanlage, wobei das Viehfutter insbesondere Stroh und/oder Heu umfasst, wobei die Anlage aus einem Kipper (1) mit einem Boden (2), der sich zwischen Seitenwänden (3 und 4) und Endwänden (5, 6) erstreckt, besteht, wobei dieser Boden teilweise einerseits einen Mischrotor (10) mit großem Durchmesser, der sich längsseitig bis zu den Endwänden (5, 6) erstreckt, und andererseits eine Verteilerschnecke (11) teilweise umgibt, die sich parallel zu dem genannten Rotor erstreckt, um die genannten Produkte von einem Ende zum anderen Ende des genannten Bodens in Richtung der Verteileröffnung (32), die auf einer der genannten Seitenwänden angeordnet ist und sich in der Nähe einer der Kipperseitenwände befindet, zu verlagern, wobei diese Öffnung (32) im Bedarfsfall mit einer Klappe (33) verschließbar ist und wobei die Verteilerschnecke an einer Übertragungsschnecke (12) montiert ist, die die Produkte einerseits in dem Kipper in Längsrichtung in Gegenrichtung zu der von der genannten Verteilerschnecke gegebenen Richtung verschiebt und andererseits mit segmentförmigen Messern für das Zerreißen und/oder das Zerschneiden der heuartigen und/oder strohartigen Produkte ausgerüstet ist, wobei die Produkte von der oberen Seite des Kippers eingeführt werden, **dadurch gekennzeichnet, dass** sie an wenigstens einer der genannten Schnecken (11, 12) mit segmentförmigen Messem (15) ausgerüstet ist, die paarweise, ein V bildend, angeordnet sind, wobei diese Paare mit Zähnen (16) zusammenwirken, die an einem balkenförmigen Träger (19) angeordnet sind, wobei sich dieser Träger auf der Länge des Gehäuses der die Messer tragenden Schnecke zwischen den genannten Endwänden (5,6) des genannten Kippers erstreckt.

2. Anlage nach Anspruch 1, **dadurch gekennzeichnet, dass** die Segmentpaare (15) auf der Länge der Schnecke (11 und/oder 12) verteilt sind und dass jedes in der Weise montiert ist, um auf einer durch einen Zahn (16) gehenden radialen Ebene übereinstimmend zentriert zu sein.

3. Anlage nach Anspruch 2, **dadurch gekennzeichnet, dass** die Segmentpaare (15) auf der Länge der Schnecke (11 und/oder 12) hinter der aktiven Fläche der Schneckenlinie (111 und/oder 121) verteilt und auf einem plattenförmigen Träger (17) montiert sind, der auf einer radialen Ebene, einstückig mit der Nabe der Schneckenlinie und mit der Schnecke fest verbunden ist.

4. Anlage nach Anspruch 2, **dadurch gekennzeichnet, dass** die Segmentpaare (15) auf der Länge der Schnecke (111 und/oder 121) verteilt und auf dem Umfangsrand der Schneckenlinie (111 und/oder 121) der genannten Schnecke (11 und/oder 12) montiert sind, wobei jedes Paar (15) auf Höhe eines Teilabschnittes (21) der Schneckenlinie angeordnet ist, der örtlich in der Weise aufgerichtet ist, dass das genannte Segmentpaar (115) auf einer durch einen Zahn gehenden radialen Ebene übereinstimmend zentriert ist.

5. Anlage nach einem der Ansprüche 2 bis 4, **dadurch gekennzeichnet, dass** das Segmentpaar (15) die Form eines V erweist, dessen Winkel in der Größenordnung zwischen 10 und 45 ° liegt.

6. Anlage nach einem der Ansprüche 1 bis 5, **dadurch gekennzeichnet, dass** die Anzahl der Segmentpaare (15) je Windung auf jeder Schnecke zum Beispiel zwischen drei und sechs liegt.

7. Anlage noch einem der Ansprüche 1 bis 6, **dadurch gekennzeichnet, dass** die mit den Segmentpaaren (15) zusammenwirkenden Zähne in der Größenordnung von 5 bis 15 cm voneinander beabstandet sind und dass ihre effektive Arbeitshöhe die gleiche Größenordnung hat.

8. Anlage nach einem der Ansprüche 1 bis 7, **dadurch gekennzeichnet, dass** die mit den Segmentpaaren (15) zusammenwirkenden Zähne (16) die Form eines Dreiecks oder eines Trapezes aufweisen, das für alle oder für einen Teil der Zähne aus einem Stahlblechband gefertigt ist, wobei dieses Band auf einem balkenförmigen Träger (19) befestigt ist.

9. Anlage nach einem der Ansprüche 1 bis 8, **dadurch gekennzeichnet, dass** die Segmentpaare (15) auf der Übertragungsschnecke (12) angeordnet und verteilt sind.

10. Anlage nach Anspruch 9, **dadurch gekennzeichnet, dass** die mit den Segmentpaaren (15) zusammenwirkenden Zähne (16) auf einem Balken (191) angeordnet sind, der im Wesentlichen auf der Höhe der Schnittlinie zwischen einer senkrechten Ebene, die mischrotorseitig (10) zu dem Gehäuse der Übertragungsschnecke (12) tangierend verläuft, und einer waagerechten Ebene, die zu dem oberen Teil des genannten Gehäuses der Übertragungsschnecke tangierend verläuft, liegt.

11. Anlage nach einem der Ansprüche 9 oder 10, **dadurch gekennzeichnet, dass** die mit den Segmentpaaren (15) zusammenwirkenden Zähne (16) auf einem balkenförmigen Träger (193) angeordnet sind, der sich auf der seitlichen Kipperwand (4), im Wesentlichen am Schnittpunkt der letzten mit einer waagerechten Ebene, die zu dem oberen Teil des genannten Gehäuses der Übertragungsschnecke (12) tangierend verläuft, erstreckt.

12. Anlage nach einem der Ansprüche 9 bis 11, **dadurch gekennzeichnet, dass** die mit den Segmentpaaren zusammenwirkenden Zähne (16) auf einem balkenförmigen Träger (192) angeordnet sind, der an der Seitenwand (4) auf Höhe des Schnittpunktes der letzten mit einer waagerechten Ebene, die zu dem oberen Teil des genannten Gehäuses der Übertragungsschnecke (12) tangierend verläuft, angeordnet sind.

13. Anlage nach einem der Ansprüche 1 bis 12, **dadurch gekennzeichnet, dass** sie Segmentpaare (15) umfasst, die auf Höhe der Verteilerschnecke (11) längsseitig der letzteren verteilt sind.

14. Anlage nach Anspruch 13, **dadurch gekennzeichnet, dass** die mit den Segmentpaaren zusammenwirkenden Zähne (15) auf einem balkenförmigen Träger (195) angeordnet sind, der an der Verbindungsstelle der Bodenteile (2) angeformt ist, die einerseits die Verteilerschnecke (11) und andererseits den Mischrotor (10) umgeben.

15. Anlage nach einem der Ansprüche 13 oder 14, **dadurch gekennzeichnet, dass** die mit den an der Verteilerschnecke (11) angeordneten Segmentpaaren (15) zusammenwirkenden Zähne (16) an einem mit der seitlichen Kipperwand (4) fest verbundenen, balkenförmigen Träger (194) am Schnittpunkt dieser letzteren mit einer waagerechten Ebene angeordnet sind, die zu dem oberen Teil des Gehäuses der genannten Verteilerschnecke (11) tangierend verläuft.

16. Anlage nach einem der Ansprüche 1 bis 15, **dadurch gekennzeichnet, dass** sie eine Art von Trichter für die Produkteinführung in den Kipper (1) umfasst, wobei sich dieser Trichter oberhalb der Übertragungsschnecke (12) in einem Bereich befindet, der durch die radiale Ebene (34) der Neutralzone der Verteilerschnecke (11) und die radiale Ebene (38) der Neutralzone der genannten Übertragungsschnecke (12) begrenzt ist.

17. Anlage nach Anspruch 16, **dadurch gekennzeichnet, dass** sie eine die Trichterwand bildende Klappe (25) umfasst, wobei diese Klappe an dem sich zwischen der Kippervorderwand und der Kipperhinterwand erstreckenden Balken zwischen der Übertragungsschnecke (12) und dem Mischrotor (10) angelenkt ist, wobei diese Klappe (25) einem zylinderartigen Steuerorgan (27) derart zugeordnet ist, um entweder zur Seite des Mischrotors (10) oder zur Seite der Übertragungsschnecke (12) geneigt werden zu können, um die in den Kipper (1) eingeführten Produkte entweder zu der einen oder zu der anderen Seite zu führen.

## Claims

1. A mixing machine for distribution of product for feeding cattle comprising particularly straw and/or hay, which machine comprises of a skip (1) provided with a bottom (2) extending between lateral walls (3, 4) and end walls (5, 6), which bottom surrounds partially on the one hand, - a mixing rotor (10) with a large diameter extending longitudinally up to the end walls (5, 6) and, on the other hand, a feeding endless screw (11) extending parallel to said rotor in order to move said product from one end to the other of said bottom, toward the feeding orifice (32) which is provided on one of said lateral walls and is directed toward one of the end walls of said skip, which orifice (32) can be shut by a flap (33) as required, which feeding screw (11) is topped with a transfer screw (12) which, on the one hand, moves the product longitudinally in the skip in a direction which is the reverse of that induced by said feeding screw and which, on the other hand, comprises knives in the form of sections in order to shred and/or cut the product , such as hay and/or straw, which product is inserted by the top of said skip, **characterised in that** it comprises, on one at least of said screw (11, 12), knives in the form of sections (15) arranged by pairs forming a V, which pairs co-operate with teeth (16) arranged on a support in the form of beam (19), which beam extends at a distance from the casing of the screw carrying said knives, between said end walls (5, 6) of said skip.

2. A machine according to claim 1, **characterised in that** the pairs of sections (15) are distributed over the length of the screw (11 and/or 12) and are each mounted in order to be centred on a radial plane crossing a corresponding tooth (16).

3. A machine according to claim 2, **characterised in that** the pairs of sections (15) are distributed over the length of the screw (11 and/or 12) behind the active surface of the propeller (111 and/or 121) of said screw, and are mounted on a support (17) in the form of a plate, which is arranged in a radial plane, integral with the hub of the propeller and said plate.

4. A machine according to claim 2, **characterised in that** the pairs of sections (15) are distributed over the length of the screw (11 and/or 12) and are mounted on the circumferential edge of the propeller (111 and/or 121) of said screw (11 and/or 12) each pair (15) is provided at the level of a screw portion (21) which is locally upright so that said pair of section (15) is centred on a radial plane crossing a corresponding tooth (16).

5. A machine according to any one of claims 2 to 4, **characterised in that** the pair of sections (15) is in the form of a V whereof the angle is of the order of 10 to 45° as required.

6. A machine according to anyone of claims 1 to 5, **characterised in that** the number of pairs of sections (15) per rotation on each screw is for instance three to six.

7. A machine according to anyone of claims 1 to 6, **characterised in that** the teeth co-operating with the pairs of sections (15) are spaced by a distance of the order of 5 to 15 cm and their effective working height is of the same order.

8. A machine according to anyone of claims 1 to 7, **characterised in that** the teeth (16) are in the form of a triangle or trapezoid made in all or in part in a steel sheet band, which band is fixed on the support in the form of a beam (19).

9. A machine according to anyone of claims 1 to 8, **characterised in that** the pairs of sections (15) are arranged and distributed on the transfer screw (12).

10. A machine according to claim 9, **characterised in that** the teeth (16) co-operating with the pairs of sections (15) are arranged on a beam (191) which lies substantially at the intersection of a vertical plane which is tangent to the casing of the transfer screw (12), on the side of the mixing rotor (10), and of a horizontal plane which is tangent to the upper portion of said casing of the transfer screw.

11. A machine according to anyone of claims 9 or 10, **characterised in that** the teeth (16) co-operating with the pairs of sections (15), are arranged on a support in the form of a beam (193) extending on the lateral wall (4) of the skip, substantially at the intersection thereof with a horizontal plane which is tangent to the upper portion of the casing of the transfer screw (12).

12. A machine according to anyone of claims 9 to 11 **characterised in that** the teeth (16) co-operating with the pairs of sections (15), are arranged on a support in the form of a beam (192) fixed on the lateral wall (4), at the intersection thereof with a horizontal plane which is tangent to the lower portion of the casing of the transfer screw (12).

13. A machine according to anyone of claims 1 to 12, **characterised in that** it comprises pairs of sections (15) arranged at the feeding screw (11), distributed over the length of said screw.

14. A machine according to claim 13, **characterised in that** the teeth co-operating with the pairs of sections (15) are arranged on a beam (195) provided at the junction of the portions of the bottom (2) surrounding on the one hand the feeding screw (11) and, on the other hand, the mixing rotor (10).

15. A machine according to anyone of claims 13 or 14, **characterised in that** the teeth (16) co-operating with the pairs of sections (15) arranged on the feeding screw (11) are arranged on a beam (194) integral with the lateral wall (4) of the skip, at the intersection thereof with a horizontal plane which is tangent to the upper portion of the casing of said feeding screw (11).

16. A machine according to anyone of claims 1 to 15, **characterised in that** it comprises a kind of hopper for introduction of the product in the skip (1), which hopper is located above the transfer screw (12) in a area delineated by the radial plane (34) of the neutral area of the feeding screw (11) and the radial plane (38) of the neutral area of said transfer screw (12).

17. A machine according to claim 16, **characterised in that** it comprises a shutter (25) forming a wall for the hopper, which shutter is hinged on the beam extending between the front and rear walls of the skip, between the transfer screw (12) and the mixing rotor (10), which shutter (25) is associated with a control member, such as an actuator (27), in order to be tilted either on the side of said mixing rotor (10) or on the side of said transfer screw (12) to guide the product which is injected into the skip (1), either on the former or the latter.
